# EUROPEAN PATENT APPLICATION

(11) **EP 2 066 014 A1**
(43) Date of publication of application: **03.06.2009**
(21) Application number: 07792541.0
(22) Date of filing: 15.08.2007
(51) Int. Cl.: H02M 7/48, H02M 1/08, H02M 7/5387

(54) **AIR CONDITIONING APPARATUS**

(30) Priority: 22.09.2006 JP 2006256663
(71) Applicant: Panasonic Corporation, Kadoma-shi Osaka 571-8501 (JP)
(72) Inventor: TANI, Yuji, Osaka 540-6207 (JP); KIDA, Satoshi, Osaka 640-6207 (JP)
(74) Representative: Ehlers, Jochen
(86) International application number: PCT/JP2007/065907
(87) International publication number: WO 2008/035519

(57) **Abstract**

An overvoltage blocking portion is provided for blocking application of the overvoltage to a power supply portion, in a case where an overvoltage is applied to an upper arm control circuit or a lower arm control circuit from a corresponding one of an upper arm switching element group and a lower arm switching element group, application of the overvoltage to a power supply portion of the remaining control circuit is blocked. The overvoltage blocking portion is configured to separate the respective switching power supply portions. Therefore, solved is a problem that, in a case where one of the switching elements in the switching element groups is broken, chained breaking occurs and a DC voltage falls into a short circuit mode that cannot be shut off by a control circuit.

## Description

### TECHNICAL FIELD

The present invention relates to an air conditioner, and particularly relates to an air conditioner that has an improved circuit configuration of an inverter switching power supply.

### BACKGROUND ART

There has conventionally been an air conditioner of this type as shown in Fig. 5 (refer to, for example, Patent document 1). Fig. 5 shows a conventional air conditioner including a diode bridge 1 that rectifies an AC power, an inverter smoothing capacitor 2 that smoothes a voltage rectified by the diode bridge 1 into a DC voltage, a compressor motor 3, and an inverter circuit portion that converts the smoothed DC voltage to an AC voltage and applies the AC voltage to the compressor motor 3. The inverter circuit portion is configured by an upper arm switching element group 4 and a lower arm switching element group 5 that are bridge-connected to each other. The air conditioner further includes a bootstrap circuit that is configured by a resistor 6, a diode 7, and a capacitor 8, an upper arm switching element drive circuit 9 that has a reference potential on a connection line between the upper arm switching element group 4 and the compressor motor 3 to drive the upper arm switching element group 4 with a power supplied according to a bootstrap circuit mode, an upper arm control circuit 10 that has a reference potential at a negative electrode of the DC voltage to drive and control the upper arm switching element drive circuit 9, a lower arm control circuit 11 that has a reference potential at the negative electrode of the DC voltage to drive and control the lower arm switching element group 5, a motor control IC 12 that has a reference potential at the negative electrode of the DC voltage, determines timings for turning on/off the upper arm switching element group 4 and the lower arm switching element group 5, and transmits timing signals thereof to the upper arm control circuit 10 and the lower arm control circuit 11, and a switching power supply 14 that is connected between the positive and negative electrodes of the smoothed DC voltage to supply a switching drive power commonly to the upper arm switching element drive circuit 9, the upper arm control circuit 10, and the lower arm control circuit 11.
Patent document 1: Japanese Unexamined Patent Publication No. 2005-160268

### DISCLOSURE OF THE INVENTION

### PROBLEMS TO BE SOLVED BY THE INVENTION

However, in the conventional configuration described above, in a case where one of the switching elements in the upper arm switching element group is broken in a short circuit mode, the potential at the positive electrode of the DC voltage is applied to the upper arm switching element drive circuit 9 to cause a breakdown voltage in the upper arm switching element drive circuit 9, while the potential at the positive electrode of the DC voltage is applied to the upper arm control circuit 10 to cause a breakdown voltage in the upper arm control circuit 10. In this case, since the upper arm control circuit 10 and the lower arm control circuit 11 share the power supply, there occurs a chained breaking mode in which the potential at the positive electrode of the DC voltage is applied to the lower arm control circuit 11 to cause a breakdown voltage in the lower arm control circuit 11, the lower arm switching element group is broken in a short circuit mode, and the DC voltage falls into a short circuit mode that cannot be shut off by a control circuit.

Such a chained breaking mode occurs also in a case where the diode 7 in the bootstrap circuit that configures the power supply of the upper arm switching element drive circuit 9 is broken in a short circuit mode, and in a case where one of the switching elements in the lower arm switching element group is broken in a short circuit mode and an overcurrent cuts off a connection point of the switching element to the negative electrode of the DC voltage.

In view of the above conventional problems, it is an object of the present invention to provide an air conditioner that has an improved circuit configuration of an inverter switching power supply.

### MEANS FOR SOLVING THE PROBLEMS

In order to solve the above conventional problems, an air conditioner according to the present invention includes: a DC voltage generation portion that rectifies and smoothes an AC voltage from an AC power supply to generate a DC voltage; an inverter circuit portion that converts the DC voltage generated by the DC voltage generation portion to an AC voltage and applies the AC voltage to a compressor motor; an inverter circuit drive control portion that drives and controls the inverter circuit portion; and a switching power supply portion that supplies a switching drive power to the inverter circuit drive control portion with use of the DC voltage generated by the DC voltage generation portion, wherein the inverter circuit portion is comprised of an upper arm switching element group and a lower arm switching element group that are bridge-connected to each other between a positive electrode line and a negative electrode line of the DC voltage, and wherein the inverter circuit drive control portion comprises an upper arm switching element drive circuit that drives the upper arm switching element group, an upper arm control circuit that drives and controls the upper arm switching element drive circuit, and a lower arm control circuit that drives and controls the lower arm switching element group. The air conditioner configured as described above is characterized by including: an overvoltage blocking portion that blocks, in a case where an overvoltage is applied to one of the upper arm control circuit and the lower arm control circuit from a corresponding one of the upper arm switching element group and the lower arm switching element group, application of the overvoltage to the power supply portion of the remaining one of the upper arm control circuit and the lower arm control circuit.

The overvoltage blocking portion is preferably configured to separate the respective switching power supply portions from one another, to additionally provide protective elements for prevention of overvoltage propagation, or to provide other means for blocking the AC power supply in a case where an overvoltage is applied to the upper arm control circuit or the lower arm control circuit.

### EFFECT OF THE INVENTION

The air conditioner according to the present invention is configured to separate the power supply of the upper arm switching element drive circuit and the upper arm control circuit from the power supply of the lower arm control circuit, to provide the protective elements for prevention of overvoltage propagation, or to provide the other means for blocking the AC power supply in a case where an overvoltage is applied to one of the control circuits. Therefore, it is possible to inhibit the DC voltage from falling into a short circuit mode that cannot be shut off by a control circuit.

### BRIEF DESCRIPTION OF THE DRAWINGS

Fig. 1 is a circuit diagram showing a configuration of an air conditioner according to First Embodiment of the present invention.
Fig. 2 is a circuit diagram showing a configuration of an air conditioner according to Second Embodiment of the present invention.
Fig. 3 is a circuit diagram showing a configuration of an air conditioner according to Third Embodiment of the present invention.
Fig. 4 is a circuit diagram showing a configuration of an air conditioner according to Fourth Embodiment of the present invention.

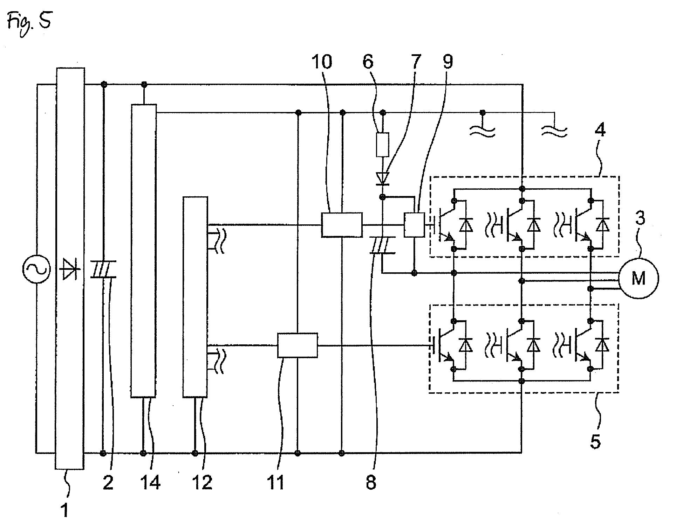

Fig. 5 is a circuit diagram showing a configuration of a conventional air conditioner.

### DESCRIPTION OF SYMBOLS

- 1: diode bridge
- 2: smoothing capacitor
- 3: compressor motor
- 4: upper arm switching element group
- 5: lower arm switching element group
- 6: resistor
- 7: diode
- 8: capacitor
- 9: upper arm switching element drive circuit
- 10: upper arm control circuit
- 11: lower arm control circuit
- 12: motor control IC
- 13: switching power supply
- 14: switching power supply
- 15: first diode
- 16: second diode
- 17: first zener diode
- 18: first resistor
- 19: second zener diode
- 20: second resistor
- 21: relay
- 22: third zener diode

### BEST MODE FOR CARRYING OUT THE INVENTION

According to a basic construction of the present invention, an air conditioner includes: a DC voltage generation portion that rectifies and smoothes an AC voltage provided from an AC power supply to generate a DC voltage; an inverter circuit portion that converts the DC voltage generated by the DC voltage generation portion to an AC voltage and applies the AC voltage to a compressor motor; an inverter circuit drive control portion that drives and controls the inverter circuit portion; and a switching power supply portion that supplies a switching drive power to the inverter circuit drive control portion with use of the DC voltage generated by the DC voltage generation portion. The inverter circuit portion is comprised of an upper arm switching element group and a lower arm switching element group that are bridge-connected to each other between a positive electrode line and a negative electrode line of the DC voltage. The inverter circuit drive control portion is comprised of an upper arm switching element drive circuit that drives the upper arm switching element group, an upper arm control circuit that drives and controls the upper arm switching element drive circuit, and a lower arm control circuit that drives and controls the lower arm switching element group. The air conditioner configured as described above is characterized by including an overvoltage blocking portion so that, in a case where an overvoltage is applied to one of the upper arm control circuit and the lower arm control circuit from a corresponding one of the upper arm switching element group and the lower arm switching element group, the overvoltage blocking portion blocks application of the overvoltage to the power supply portion of the remaining one of the upper arm control circuit and the lower arm control circuit.

According to First Embodiment of the present invention, in the basic construction of the present invention, the air conditioner is **characterized in that** the switching power supply portion is provided therein with a first output winding functioning as a power supply common to the upper arm switching element drive circuit and the upper arm control circuit, and provided with a second output winding functioning as a power supply to the lower arm drive circuit, and that the overvoltage blocking portion separates the first output winding and the second output winding from each other on the power supply sides thereof. As described above, by separating the power supply of the upper arm switching element drive circuit and the upper arm control circuit from the power supply of the lower arm control circuit, even in a case where a breakdown voltage is caused in one of the circuits by an overvoltage from one of the switching elements, it is possible to prevent the overvoltage from being diverted to the power supply of the other circuit. Therefore, the DC voltage can be inhibited from falling into a short circuit mode that cannot be shut off by a control circuit.

According to Second Embodiment of the present invention, in the basic construction of the present invention, the air conditioner is **characterized in that** the switching power supply portion is provided with an output winding functioning as a power supply common to the upper arm switching element drive circuit, to the upper arm control circuit, and to the lower arm control circuit, and that the overvoltage blocking portion is configured of protective elements for preventing propagation of an overvoltage, and that, as the protective elements for preventing propagation, first and second diodes are provided, the first diode placed at a power input portion of the upper arm switching element drive circuit and the upper arm control circuit, and the second diode placed at a power input portion of the lower arm control circuit. As described above, by providing the diode on the positive electrode line of the power supply to the upper arm switching element drive circuit and the upper arm control circuit as well as providing the diode on the positive electrode line of the power supply to the lower arm control circuit, even in a case where a breakdown voltage is caused in one of the circuits by an overvoltage from one of the switching elements, the overvoltage can be prevented from being diverted to the power supply of the other circuit. Therefore, the DC voltage can be inhibited from falling into a short circuit mode that cannot be shut off by a control circuit.

According to Third Embodiment of the present invention, in the basic construction of the present invention, the air conditioner is **characterized in that** the switching power supply portion is provided with an output winding functioning as a power supply common to the upper arm switching element drive circuit, to the upper arm control circuit, and to the lower arm control circuit, and that the overvoltage blocking portion is configured of protective elements for preventing propagation of an overvoltage, wherein, as the protective elements for preventing overvoltage propagation, a first resistor element is placed at a power input portion of the upper arm switching element drive circuit and the upper arm control circuit, a first zener diode is provided having a cathode connected between the first resistor element and the power input portion of the upper arm switching element drive circuit and the upper arm control circuit and having an anode connected to a negative electrode of the DC voltage, a second resistor element is placed at a power input portion of the lower arm control circuit, and a second zener diode is provided having a cathode connected between the second resistor element and the power input portion of the lower arm control circuit and having an anode connected to the negative electrode of the DC voltage.

As described above, the zener diode is connected between the electrodes of the power supply in the power input portion of the upper arm switching element drive circuit and the upper arm control circuit such that the cathode thereof is connected to the positive electrode, the resistor is provided between the cathode of the zener diode and the output portion of the switching power supply, the other zener diode is connected between the electrodes of the power supply in the power input portion of the lower arm control circuit such that the cathode thereof is connected to the positive electrode, and the other resistor is provided between the cathode of the other zener diode and the output portion of the switching power supply. Thus, in a case where a breakdown voltage is caused in one of the circuits by an overvoltage fed from one of the switching elements and the overvoltage is applied to the power supply thereof, the zener diode connected between the electrodes of the power supply is broken in a short circuit mode to protect the power supply from the overvoltage. In the meantime, the resistor inserted between the zener diode and the output portion of the switching power supply is cut off and broken by a short circuit current from the zener diode. Accordingly, it is possible to prevent the overvoltage from being diverted to the power supply of the other circuit, and the DC voltage can therefore be inhibited from falling into a short circuit mode that cannot be shut off by a control circuit.

According to Fourth Embodiment of the present invention, in the basic construction of the present invention, the air conditioner is **characterized in that** the switching power supply portion is provided with an output winding functioning as a power supply common to the upper arm switching element drive circuit, to the upper arm control circuit, and to the lower arm control circuit, and that the overvoltage blocking portion is comprised of an AC power blocking portion for preventing application of an overvoltage and protective elements for preventing propagation of an overvoltage, wherein, as the AC power blocking portion, a relay is placed between the AC power supply and the DC voltage generation portion, the relay having a coil portion of which a power supply side is connected to an output portion of the switching power supply portion, and wherein a third zener diode is provided as the protective elements for prevention of overvoltage propagation, the third zener diode having a cathode connected to the output portion of the switching power supply portion and an anode connected to a negative electrode of the DC voltage.

As described above, the AC power supply is provided with the relay, the power supply connected to the coil of the relay is connected to the power supply to the upper arm switching element drive circuit, to the upper arm control circuit, and to the lower arm control circuit, and the zener diode is connected between the electrodes of the power supply to the upper arm switching element drive circuit, to the upper arm control circuit and to the lower arm control circuit, such that the cathode thereof is connected to the positive electrode. Thus, even in a case where an overvoltage from one of the switching elements breaks one of the upper arm switching element drive circuit, the upper arm control circuit, and the lower arm control circuit, and the overvoltage is then applied to the power supply, the zener diode is broken in a short circuit mode and the coil current of the relay is blocked to switch off the relay. Therefore, the DC voltage can be inhibited from falling into a short circuit mode that cannot be shut off by a control circuit.

Described below are the embodiments of the present invention with reference to the drawings. It is noted that the present invention should not be limited by these embodiments.

### (First Embodiment)

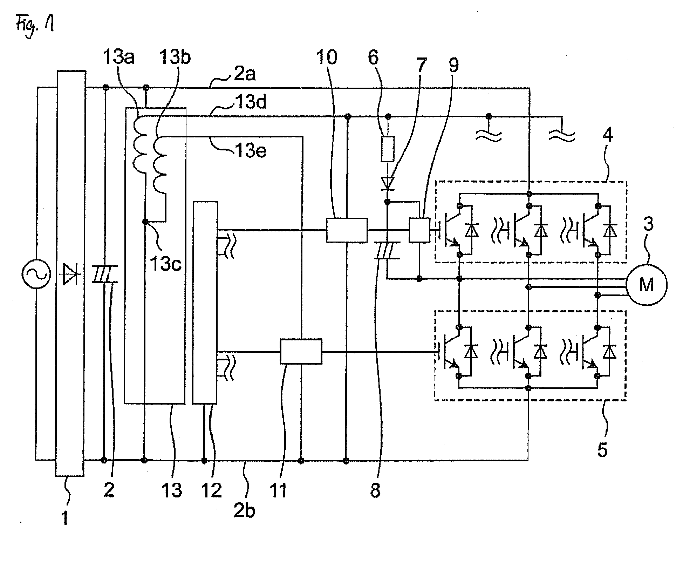

Fig. 1 shows a configuration of an air conditioner according to First Embodiment of the present invention. The air conditioner shown in Fig. 1 includes a diode bridge 1 that rectifies an AC power, an inverter smoothing capacitor 2 that smoothes a voltage rectified by the diode bridge 1 into a DC voltage, and an inverter circuit portion that is connected between a positive electrode line 2a and a negative electrode line 2b of the smoothed DC voltage to convert the DC voltage to an AC voltage and apply the AC voltage to a compressor motor 3 as a drive power. The inverter circuit portion is comprised of an upper arm switching element group 4 and a lower arm switching element group 5 that are bridge-connected to each other. The diode bridge 1 and the smoothing capacitor 2 configure a DC voltage generation portion. The air conditioner further includes a bootstrap circuit that is comprised of a resistor 6, a diode 7 and an electrolytic capacitor 8. The bootstrap circuit supplies a drive power to a high voltage portion (an upper arm portion) in the inverter circuit portion.

The air conditioner further includes an upper arm switching element drive circuit 9 that drives the upper arm switching element group 4. The upper arm switching element drive circuit 9 has a reference potential on a connection line between the upper arm switching element group 4 and the compressor motor 3 to drive the upper arm switching element group 4 with a drive power supplied from the bootstrap circuit. The air conditioner further includes an upper arm control circuit 10 that has a reference potential on the negative electrode line 2b of the DC voltage to drive and control the upper arm switching element drive circuit 9, a lower arm control circuit 11 that has a reference potential on the negative electrode line 2b of the DC voltage to drive and control the lower arm switching element group 5, and a motor control IC 12 that determines timings of turning on/off the upper arm switching element group 4 and the lower arm switching element group 5. The motor control IC 12 thus determines the timings of turning on/off the upper arm switching element group 4 and the lower arm switching element group 5 and transmits timing signals thereof to the upper arm control circuit 10 and lower arm control circuit 11. The air conditioner further includes a switching power supply 13 that is connected between the positive electrode line 2a and the negative electrode line 2b of the smoothed DC voltage to supply a switching drive power to the upper arm switching element drive circuit 9, to the upper arm control circuit 10, and to the lower arm control circuit 11. In this arrangement, an inverter circuit drive control portion is comprised of the upper arm switching element drive circuit 9, the upper arm control circuit 10, the lower arm control circuit 11, and the motor control IC 12.

In the above configuration, the switching power supply 13 has a first output winding 13a supplying a power in common to the upper arm switching element drive circuit 9 and the upper arm control circuit 10, and has a second output winding 13b for supplying a power to the lower arm control circuit 11. The first output winding 13a and the second output winding 13b are unified at a connection point 13c to be connected to the negative electrode of the DC voltage. On the other hand, the first output winding 13a and the second output winding 13b are branched off to each other in the power supply side. The power supplied from the first output winding 13a runs through a first power supply line 13d to be applied to both of the upper arm switching element drive circuit 9 and the upper arm control circuit 10, while the power supplied from the second output winding 13b runs through a second power supply line 13e to be applied to the lower arm control circuit 11.

In the air conditioner configured as described above, the power supply circuit for both of the upper arm switching element drive circuit 9 and the upper arm control circuit 10 and the power supply circuit for the lower arm control circuit 11 are separately provided as the first output winding 13a and the second output winding 13b, respectively. Even in a case where a breakdown voltage is caused in one of the upper arm control circuit 10 and the lower arm control circuit 11 by an overvoltage from one of the switching elements, the overvoltage is prevented from being diverted to the power supply circuit of the other circuit. The above configuration can therefore inhibit a chained breaking mode in which the DC voltage falls into a short circuit mode that cannot be shut off by a control circuit.

### (Second Embodiment)

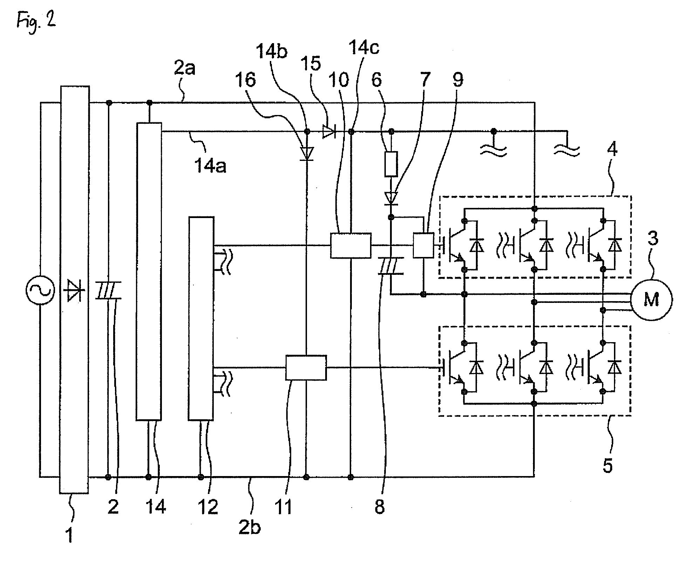

Fig. 2 shows a configuration of an air conditioner according to Second Embodiment of the present invention. The air conditioner according to Second Embodiment is **characterized in that,** in the air conditioner of First Embodiment shown in Fig. 1, the switching power supply is replaced with a switching power supply 14 which has an output winding (not shown) supplying a power in common to the upper arm switching element drive circuit, to the upper arm control circuit and to the lower arm control circuit, wherein a first diode 15 is connected in a current forward direction to a power input portion of the upper arm switching element drive circuit and the upper arm control circuit, and a second diode 16 is provided at a power input portion of the lower arm control circuit. More specifically, as shown in Fig. 2, the air conditioner includes a diode bridge 1 that rectifies an AC power, an inverter smoothing capacitor 2 that smoothes a voltage rectified by the diode bridge 1 into a DC voltage, and an inverter circuit portion that is connected between a positive electrode line 2a and a negative electrode line 2b of the smoothed DC voltage to convert the DC voltage to an AC voltage and apply the AC voltage to a compressor motor 3. The inverter circuit portion is comprised of an upper arm switching element group 4 and a lower arm switching element group 5 that are bridge-connected to each other.

The air conditioner further includes a bootstrap circuit that is comprised of a resistor 6, a diode 7 and a capacitor 8, and includes an upper arm switching element drive circuit 9 that drives the upper arm switching element group 4. The upper arm switching element drive circuit 9 has a reference potential on a connection line between the upper arm switching element group 4 and the compressor motor 3 to drive the upper arm switching element group 4 with a power supplied from the bootstrap circuit. The air conditioner further includes an upper arm control circuit 10 that has a reference potential on the negative electrode line 2b of the DC voltage to drive and control the upper arm switching element drive circuit 9, a lower arm control circuit 11 that has a reference potential on the negative electrode line 2b of the DC voltage to drive and control the lower arm switching element group 5, and a motor control IC 12 that determines timings of turning on/off the upper arm switching element group 4 and the lower arm switching element group 5.

The air conditioner according to Second Embodiment further includes the switching power supply 14 that is connected between the positive electrode line 2a and the negative electrode line 2b of the smoothed DC voltage to supply a power commonly to the upper arm switching element drive circuit 9, to the upper arm control circuit 10 and to the lower arm control circuit 11. The power supplied from the switching power supply 14 runs through a connection point 14b on a positive electrode line 14a and through the second diode 16 to be supplied to the lower arm control circuit 11, while running through the connection point 14b on the positive electrode line 14a, and through the first diode 15 and a connection point 14c to be supplied to the upper arm control circuit 10. As shown in Fig. 2, the first diode 15 is connected between the connection points 14b and 14c on the positive electrode line 14a of the switching power supply 14, and the second diode 16 is provided on a line connecting the connection point 14b and the lower arm control circuit 11. As described above, Second Embodiment is **characterized in that** the first diode 15 is provided at the power input portion of the upper arm switching element drive circuit and the upper arm control circuit, and the second diode 16 is provided at the power input portion of the lower arm control circuit.

In the configuration according to Second Embodiment, the first diode 15 is provided at the power input portion (between the connection points 14b and 14c) of the upper arm switching element drive circuit and the upper arm control circuit on the positive electrode line 14a of the switching power supply 14, while the second diode 16 is provided at the power input portion (on the line connecting the connection point 14b and the lower arm control circuit 11) of the lower arm control circuit. Even in a case where a breakdown voltage is caused in one of the upper arm control circuit 10 and the lower arm control circuit 11 by an overvoltage from one of the switching elements, the overvoltage is prevented from being diverted to the power supply circuit of the other control circuit. The above configuration can therefore inhibit a chained breaking mode in which the DC voltage falls into a short circuit mode that cannot be shut off by a control circuit.

### (Third Embodiment)

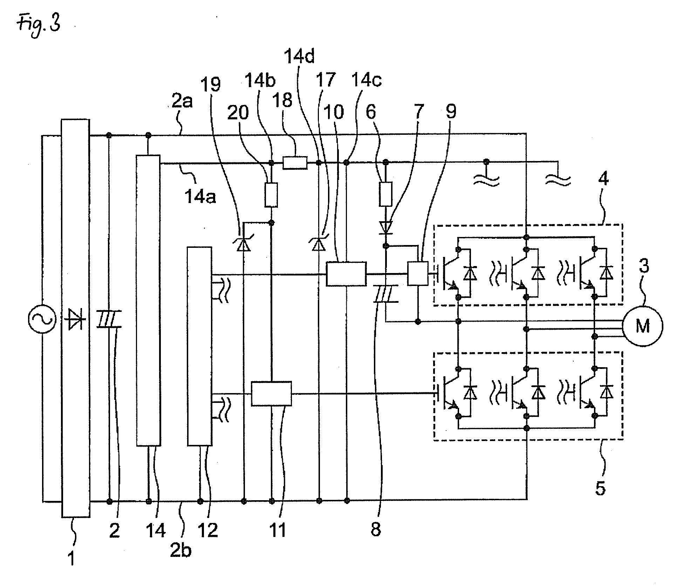

Fig. 3 shows a configuration of an air conditioner according to Third Embodiment of the present invention. The air conditioner according to Third Embodiment is **characterized in that,** in the air conditioner of Second Embodiment shown in Fig. 2, the first diode is replaced with a first resistor 18, and that there is provided a first zener diode 17 having a cathode connected between the first resistor and the power input portion of the upper arm switching element drive circuit and the upper arm control circuit and having an anode connected to the negative electrode of the DC voltage, while the second diode is replaced with a second resistor 20, and that there is provided a second zener diode 19 having a cathode connected between the second resistor 20 and the power input portion of the lower arm control circuit 11 and having an anode connected to the negative electrode line 2b of the DC voltage. More specifically, as shown in Fig. 3, the air conditioner includes a diode bridge 1 that rectifies an AC power, an inverter smoothing capacitor 2 that smoothes a voltage rectified by the diode bridge 1 into a DC voltage, and an inverter circuit portion that is connected between a positive electrode line 2a and a negative electrode line 2b of the smoothed DC voltage to convert the DC voltage to an AC voltage and apply the AC voltage to a compressor motor 3. The inverter circuit portion is comprised of an upper arm switching element group 4 and a lower arm switching element group 5 that are bridge-connected to each other.

The air conditioner further includes a bootstrap circuit that is comprised of a resistor 6, a diode 7 and a capacitor 8, and includes an upper arm switching element drive circuit 9 that drives the upper arm switching element group 4. The upper arm switching element drive circuit 9 has a reference potential on a connection line between the upper arm switching element group 4 and the compressor motor 3 to drive the upper arm switching element group 4 with a power supplied from the bootstrap circuit. The air conditioner further includes an upper arm control circuit 10 that has a reference potential on the negative electrode line 2b of the DC voltage to drive and control the upper arm switching element drive circuit 9, a lower arm control circuit 11 that has a reference potential on the negative electrode line 2b of the DC voltage to drive and control the lower arm switching element group 5, and a motor control IC 12 that determines timings of turning on/off the upper arm switching element group 4 and the lower arm switching element group 5. There is further included a switching power supply 14 that is connected between the positive electrode line 2a and the negative electrode line 2b of the smoothed DC voltage to supply a power commonly to the upper arm switching element drive circuit 9, to the upper arm control circuit 10 and to the lower arm control circuit 11.

In the air conditioner according to Third Embodiment, the first zener diode 17 is provided at the power input portion of the upper arm switching element drive circuit 9 and the upper arm control circuit 10 on a line connecting a positive electrode line 14a of the switching power supply 14 and the negative electrode line 2b such that the cathode of the first zener diode 17 is connected to the positive electrode. The first resistor 18 is provided on the positive electrode line 14a between the cathode of the first zener diode 17 and an output portion of the switching power supply 14. The second zener diode 19 is connected between the positive electrode and the negative electrode of the power input portion of the lower arm control circuit 11 such that the cathode thereof is connected to the positive electrode. The second resistor 20 is connected between the cathode of the second zener diode 19 and a connection point 14b on the positive electrode line 14a of the switching power supply 14.

In the configuration described above, even in a case where a breakdown voltage is caused in one of the upper arm control circuit 10 and the lower arm control circuit 11 by an overvoltage from one of the switching elements and the overvoltage is applied to the power supply thereof, the zener diode connected between the respective electrodes of the power supply is broken in a short circuit mode so as to protect the power supply from the overvoltage. In the meantime, the resistor inserted between the output portion of the switching power supply 14 and the zener diode is cut off and broken by a short circuit current from the zener diode so as to prevent the overvoltage from being diverted to the power supply of the other circuit. This configuration according to Third Embodiment can therefore inhibit the DC voltage from falling into a short circuit mode that cannot be shut off by a control circuit.

### (Fourth Embodiment)

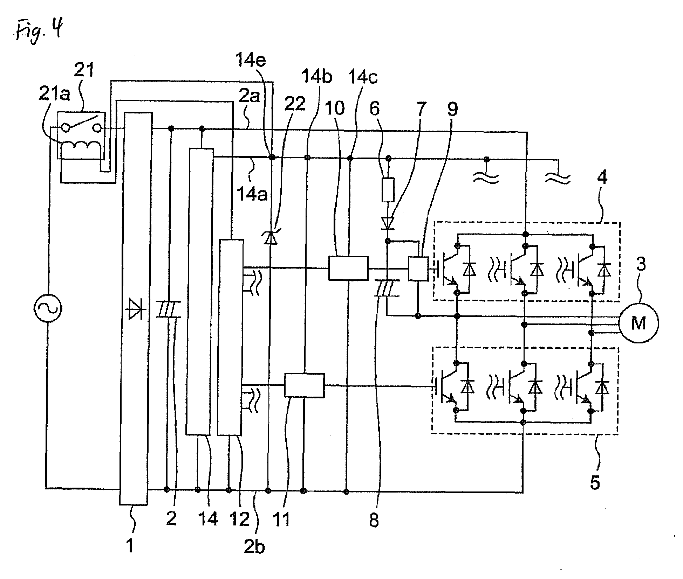

Fig. 4 shows a configuration of an air conditioner according to Fourth Embodiment of the present invention. The air conditioner according to Fourth Embodiment is **characterized in that,** in the air conditioner of First Embodiment shown in Fig. 1, the switching power supply is replaced with a switching power supply 14 which has an output winding for supplying a power in common to the upper arm switching element drive circuit, to the upper arm control circuit and to the lower arm control circuit, and that a zener diode 22 is provided at an output portion of the switching power supply, and that a relay 21 is provided between the AC power supply and the diode bridge 1, the relay 21 having a coil portion 21a of which a power supply side being connected to an output portion 14e of the switching power supply 14. More specifically, as shown in Fig. 4, the air conditioner includes a diode bridge 1 that rectifies an AC power, an inverter smoothing capacitor 2 that smoothes a voltage rectified by the diode bridge 1 into a DC voltage, and an inverter circuit portion that is connected between a positive electrode line 2a and a negative electrode line 2b of the smoothed DC voltage to convert the DC voltage to an AC voltage and apply the AC voltage to a compressor motor 3. The inverter circuit portion is comprised of an upper arm switching element group 4 and a lower arm switching element group 5 that are bridge-connected to each other.

The air conditioner further includes a bootstrap circuit that is comprised of a resistor 6, a diode 7 and a capacitor 8, and includes an upper arm switching element drive circuit 9 that drives the upper arm switching element group 4. The upper arm switching element drive circuit 9 has a reference potential on a connection line between the upper arm switching element group 4 and the compressor motor 3 to drive the upper arm switching element group 4 with a power supplied from the bootstrap circuit. The air conditioner further includes an upper arm control circuit 10 that has a reference potential on the negative electrode line 2b of the DC voltage to drive and control the upper arm switching element drive circuit 9, a lower arm control circuit 11 that has a reference potential on the negative electrode line 2b of the DC voltage to drive and control the lower arm switching element group 5, and a motor control IC 12 that determines timings of turning on/off the upper arm switching element group 4 and the lower arm switching element group 5. The air conditioner further includes the switching power supply 14 that is connected between the positive electrode line 2a and the negative electrode line 2b of the smoothed DC voltage to supply a power commonly to the upper arm switching element drive circuit 9, to the upper arm control circuit 10 and to the lower arm control circuit 11. As described above, the air conditioner according to Fourth Embodiment has a configuration similar to that of Third Embodiment shown in Fig. 3.

In Fourth Embodiment shown in Fig. 4, the relay 21 is connected to the AC power supply. The coil portion 21a of the relay 21 has one end that extends through the connection point 14e on a positive electrode line 14a of the switching power supply 14 and is connected to power input terminals of the upper arm switching element drive circuit 9, the upper arm control circuit 10, and the lower arm control circuit 11, while the other end that is connected to a power input terminal of the motor control IC 12. The third zener diode 22 is further connected between the positive electrode and the negative electrode of the power supply in common to the upper arm switching element drive circuit 9, to the upper arm control circuit 10 and to the lower arm control circuit 11, such that the cathode of the third zener diode 22 is connected to the positive electrode. In other words, the third zener diode 22 is provided at a power input portion of the lower arm control circuit 11 on a line connecting the connection point 14e on the positive electrode line 14a of the switching power supply 14 and the negative electrode line 2b such that the cathode of the third zener diode 22 is connected to the positive electrode.

In the configuration described above, even in a case where one of the upper arm switching element drive circuit 9, the upper arm control circuit 10, and the lower arm control circuit 11 is broken by an overvoltage from one of the switching elements and the overvoltage is applied to the power supply thereof, the third zener diode 22 is broken in a short circuit mode, and the coil current of the relay 21 is blocked to turn off the relay 21. Accordingly, the above configuration can inhibit the DC voltage from falling into a short circuit mode that cannot be shut off by a control circuit.

### INDUSTRIAL APPLICABILITY

The present invention provides the technique for improvement in a circuit configuration of an inverter switching power supply included in an air conditioner, and such a technique is applicable to other inverter devices that have similar configurations.

## Claims

1. An air conditioner comprising:
a DC voltage generation portion that rectifies and smoothes an AC voltage provided from an AC power supply to generate a DC voltage;
an inverter circuit portion that converts the DC voltage generated by the DC voltage generation portion to an AC voltage and applies the AC voltage to a compressor motor;
an inverter circuit drive control portion that drives and controls the inverter circuit portion; and
a switching power supply portion that supplies a switching drive power to the inverter circuit drive control portion with use of the DC voltage generated by the DC voltage generation portion,
wherein the inverter circuit portion is comprised of an upper arm switching element group and a lower arm switching element group that are bridge-connected to each other between a positive electrode line and a negative electrode line of the DC voltage, and
the inverter circuit drive control portion is comprised of an upper arm switching element drive circuit that drives the upper arm switching element group, an upper arm control circuit that drives and controls the upper arm switching element drive circuit, and a lower arm control circuit that drives and controls the lower arm switching element group,
the air conditioner **characterized by** including:
an overvoltage blocking portion that, in a case where an overvoltage is applied to one of the upper arm control circuit and the lower arm control circuit from a corresponding one of the upper arm switching element group and the lower arm switching element group, blocks application of the overvoltage to the power supply portion of the remaining one of the upper arm control circuit and the lower arm control circuit.

2. The air conditioner according to claim 1, wherein the switching power supply portion is provided therein with a first output winding functioning as a power supply common to the upper arm switching element drive circuit and the upper arm control circuit, and provided with a second output winding functioning as a power supply to the lower arm drive circuit, and that the overvoltage blocking portion separates the first output winding and the second output winding from each other on the power supply sides thereof.

3. The air conditioner according to claim 1, wherein the switching power supply portion is provided with an output winding functioning as a power supply common to the upper arm switching element drive circuit, to the upper arm control circuit, and to the lower arm control circuit, and wherein the overvoltage blocking portion is configured by protective elements for preventing propagation of an overvoltage, and wherein the protective elements for preventing overvoltage propagation is provided with first diode placed at a power input portion of the upper arm switching element drive circuit and the upper arm control circuit, and a second diode placed at a power input portion of the lower arm control circuit.

4. The air conditioner according to claim 1, wherein the switching power supply portion is provided with an output winding functioning as a power supply common to the upper arm switching element drive circuit, to the upper arm control circuit, and to the lower arm control circuit, and wherein the overvoltage blocking portion is configured by protective elements for preventing propagation of an overvoltage, wherein the protective elements for preventing overvoltage propagation is provided with a first resistor element placed at a power input portion of the upper arm switching element drive circuit and the upper arm control circuit, a first zener diode having a cathode connected between the first resistor element and the power input portion of the upper arm switching element drive circuit and the upper arm control circuit and an anode connected to a negative electrode of the DC voltage, a second resistor element placed at a power input portion of the lower arm control circuit, and a second zener diode having a cathode connected between the second resistor element and the power input portion of the lower arm control circuit and an anode connected to the negative electrode of the DC voltage.

5. The air conditioner according to claim 1, wherein the switching power supply portion is provided with an output winding functioning as a power supply common to the upper arm switching element drive circuit, to the upper arm control circuit, and to the lower arm control circuit, wherein the overvoltage blocking portion is configured by an AC power blocking portion for preventing application of an overvoltage, and protective elements for preventing propagation of an overvoltage, wherein the AC power blocking portion is provided as a relay placed between the AC power supply and the DC voltage generation portion, said relay having a coil portion of which a power supply side is connected to an output portion of the switching power supply portion, and wherein the protective elements for prevention of overvoltage propagation is provided with a third zener diode having a cathode connected to the output portion of the switching power supply portion and an anode connected to a negative electrode of the DC voltage.
